Europäisches Patentamt

European Patent Office

Office européen des brevets

(19)

(11) Numéro de publication: **0 390 647**
**A1**

## (12) DEMANDE DE BREVET EUROPEEN

(21) Numéro de dépôt: **90400771.3**

(22) Date de dépôt: **21.03.90**

(51) Int. Cl.⁵: **C08K 3/22, C08K 3/26** .

La demande, qui etait incomplète au moment du dépot, est publiée telle quelle (article 93 (2) CBE). Le passage de la description ou des revendications qui comporte manifestement une omission est présenté comme tel.

(30) Priorité: **23.03.89 FR 8904112**

(43) Date de publication de la demande:
**03.10.90 Bulletin 90/40**

(84) Etats contractants désignés:
**AT BE CH DE DK ES FR GB GR IT LI LU NL SE**

(71) Demandeur: **COMPAGNIE DE RAFFINAGE ET DE DISTRIBUTION TOTAL FRANCE**
**84, rue de Villiers**
**F-92300 Levallois Perret(FR)**

Demandeur: **OMYA S.A.**
**35, Quai André Citroen**
**F-75725 Paris Cedex 15(FR)**

(72) Inventeur: **Burel, Pierre**
**9 Rue Francis Carco**
**F-76620 Le Havre(FR)**
Inventeur: **Lemoine, Guy**
**81 Rue Louis Delamare**
**F-76600 Le Havre(FR)**
Inventeur: **Prat, Claude**
**30Bis, rue de L'Agriculture**
**F-95110 Sannois(FR)**

(74) Mandataire: **Derambure, Christian**
**BUGNION ASSOCIES 55, rue Boissonade**
**F-75014 Paris(FR)**

(54) **Composition de polymères à haute résistance au feu, exempte d'halogène.**

(57) Composition de polymères chargée à haute résistance au feu, exempte d'halogène, comprenant un constituant polymère qui est un élastomère et/ou un élastomère à caractère thermoplastique et une charge minérale ignifugeante formée d'hydroxyde d'aluminium et de carbonate de calcium, d'au moins un agent réticulant et éventuellement d'au moins un agent plastifiant, qui se caractérise en ce qu'elle comporte, pour 100 parties dudit constituant polymère, de 100 à 500 parties en poids d'une charge minérale ignifugeante constituée d'hydroxyde d'aluminium ayant une surface spécifique B.E.T. au moins égale à 4 m².g⁻¹ et de 10 à 50 parties en poids de carbonate de calcium de surface spécifique comprise entre 3 et 10 m².g⁻¹ , bornes incluses.

La composition de polymères selon l'invention peut être mise en oeuvre dans les applications relatives au revêtement des sols, à l'isolation et au garnissage des fils et câbles électriques, au moulage d'objets et à l'extrusion de profilés nécessitant une bonne résistance au feu.

EP 0 390 647 A1

## EP 0 390 647 A1

### Domaine de l'invention.

L'invention concerne une composition de polymères à haute résistance au feu, à faible émission de fumées, non toxique et exempte d'halogène, comprenant un constituant polymère qui est un élastomère et/ou un élastomère à caractère thermoplastique et une charge minérale formée d'un mélange d'hydroxyde d'aluminium et de carbonate de calcium, cette composition étant particulièrement adaptée au revêtement des sols, à l'isolation et/ou au gainage des fils et câbles électriques, à la fabrication d'objets nécessitant une bonne résistance au feu.

### Arrière-plan de l'invention.

Les domaines les plus importants où les compositions de polymères d'ignifugation trouvent leur application sont aussi bien ceux du revêtement des sols ou de la réalisation d'objets nécessitant une réelle résistance au feu, que ceux de l'isolation et/ou du gainage des conducteurs électriques pour lesquels sont recherchées des propriétés simultanément isolantes et de bonne tenue au feu.

C'est pourquoi, depuis longtemps, de très nombreuses recherches ont été effectuées pour trouver des compositions de polymères ayant une bonne résistance non seulement à l'inflammation mais aussi à la propagation du feu.

Bien qu'il existe déjà sur le marché de nombreuses compositions de polymères, par exemple pour l'isolation et le gainage électrique, qui ne peuvent s'enflammer sous l'effet d'une anomalie électrique, il subsiste le risque de voir ces compositions s'enflammer quand elles sont portées à une température élevée par une source de chaleur externe, comme cela est le cas dans un incendie.

Dès lors que ce risque devient réalité, l'incendie peut se propager par exemple par le sol ou par des faisceaux de câbles électriques avec émission de fumées denses et dangereuses en raison de la production de gaz toxiques et/ou corrosifs, notamment pour le personnel des services de sécurité appelés à lutter contre le sinistre.

Aussi, il s'est avéré éminemment souhaitable que les compositions de polymères ignifuges destinées à des usages aussi divers que des produits de revêtement pour les sols, pour l'isolation et/ou le gainage de conducteurs électriques, ou encore pour la réalisation d'objets nécessitant une bonne endurance au feu, aient la meilleure résistance possible à l'inflammation et à la propagation de la combustion ainsi qu'une émission de fumée faible et présentent les risques de toxicité les plus ténus pour l'environnement humain.

Plusieurs types de compositions de polymères ignifuges susceptibles de répondre aux caractéristiques précitées d'endurance au feu ont été décrits dans la littérature spécialisée.

Un premier type de compositions de polymères ignifuges doté simultanément de propriétés isolantes et de tenue au feu concerne celles réalisées à partir de matières polymères contenant des halogènes tels que le polyéthylène chloré, le polychlorure de vinyle, le chlorobutadiène, le polychloroprène; la paraffine chlorée, le polyéthylène chlorosulfoné et généralement dépourvues de charges minérales. Mais leur combustion engendre la formation de gaz toxiques et/ou corrosifs (acide chlorhydrique par exemple) et l'émission de fumées généralement denses et particulièrement dangereuses pour l'environnement.

Un deuxième type de compositions de polymères ignifuges comportant de nombreux constituants dont éventuellement des charges minérales inertes (c'est-à-dire ne renfermant pas d'eau liée chimiquement) telles que du carbonate de calcium, mais démuni d'halogènes, a été proposé et expérimenté pour éviter l'inconvénient majeur des compositions du premier type, c'est-à-dire l'émission de fumées denses et toxiques.

Une composition de polymères de ce deuxième type est décrite dans le brevet français 1,475,531. Elle comporte en mélange du bitume, des copolymères d'éthylène, d'esters vinyliques et/ou acryliques, de polyisobutylène et, éventuellement, des charges inertes telles que par exemple du $CaCO_3$. Toutefois, cette composition présente un désavantage certain car il apparaît que la combustion et la propagation des flammes sont rapides, bien que la non toxicité des fumées soit améliorée.

Un troisième type de compositions, de polymères ignifuges est orienté vers l'emploi de matières polymères exemptes d'halogènes (comme le sont les compositions de polymères du deuxième type) et d'une charge ignifuge constituée par l'un au moins des composés minéraux réactifs (c'est-a-dire renfermant de l'eau liée chimiquement) tels que l'hydroxyde d'aluminium, l'hydroxyde de magnésium, l'hydroxyde de calcium, éventuellement en présence de $CaCO_3$ ou autre matière minérale inerte, et susceptibles de fournir aux compositions de polymères destinées au moins au gainage des fils et câbles électriques une résistance au feu améliorée.

2

C'est pourquoi de nombreuses publications décrivent l'usage de ces charges ignifuges hydratées dans des compositions de polymères d'origines diverses.

Certaines de ces publications (FR 2,141,918 et US 3,832,326) revendiquent l'emploi de copolymères d'éthylène et d'acétate de vinyle chargés à l'aide d'hydroxyde d'aluminium pour élaborer des compositions de polymères résistantes au feu. Mais, comme on a pu le constater, la mise en oeuvre de ces compositions est très difficile, leur coût trop élevé pour les rendre intéressantes dans les emplois courants et l'effet d'ignifugation vite limité (puisqu'il est lié à la quantité d'hydroxyde d'aluminium présent), bien que ces compositions de polymères émettent des fumées peu toxiques et en plus faible quantité que les compositions antérieurement évoquées.

Une autre publication (le brevet US 4,000,140) préconise l'emploi comme matière polymère d'un mélange de bitume, de copolymère éthylène-propylène monomère (EPM), de copolymère éthylène-propylène-diène monomère (EPDM) et, comme charge, l'emploi de carbonate de calcium précipité. Mais la présence de bitume dans une telle composition de polymères est à l'origine d'une émission de fumée importante et particulièrement opaque lors d'un sinistre, et l'usage du carbonate de calcium comme charge minérale ne diminue que faiblement la combustibilité de la composition de polymères, sa fonction essentielle étant d'abaisser le coût de la composition de polymères.

Un autre document (GB 2,009,488) préfère comme matière polymère un mélange de polyéthylène, de copolymère d'éthylène-acétate de vinyle et de copolymère d'éthylène-propylène-diène monomère, et comme charge minérale de l'hydroxyde d'aluminium (Al(OH)$_3$) seul ou éventuellement associé avec du carbonate de calcium. Cependant, il apparaît à l'expérience que le carbonate de calcium entre dans la composition de polymères, plus pour en abaisser le prix et jouer un rôle de diluant des matériaux constitutifs que pour avoir une action ignifugeante, nulle précision n'étant apportée sur les quantités mises en oeuvre et/ou ses caractéristiques physiques, telles que par exemple la granulométrie.

D'autres publications (FR 2,377,688 ou JP 57-225563) préconisent des compositions ignifuges formées

:

- pour l'une, des copolymères d'éthylène-propylène et d'éthylène-propylène-diène monomère et d'une charge minérale constituée par de l'hydroxyde d'aluminium seul ou en mélange avec du CaCO$_3$ et/ou du kaolin,
- pour l'autre, d'un mélange de copolymères d'éthylène-propylène, d'éthylène-propylène-diène monomère, d'éthylène-acétate de vinyle, d'éthylène-acétate d'éthyle et d'éthylène-butylène, et de charges minérales comportant en mélange un hydroxyde métallique et de la silice.

Toutefois, il apparaît que ces compositions se distinguent de celles mentionnées dans le brevet britannique précité (GB 2,009,488) plus par la formulation du constituant polymère, que par les matières minérales inertes présentes (carbonate de calcium, kaolin ou silice) dont le rôle reste celui d'une matière minérale essentiellement diluante, parce qu'économique et non ignifugeante.

Enfin, lors du Meeting à Montréal de mai 1987 (131ème meeting de la Division Caoutchouc (ACS)), G. F. Beekman et M. A. Hastbacka ont mentionné des compositions de polymères résistantes au feu, qui sont formées de copolymère éthylène-propylène-diène monomère et d'une charge minérale ignifugeante d'hydroxyde d'aluminium éventuellement remplacé en tout ou partie par de l'hydroxyde de magnésium (Mg(OH)$_2$) ou par du carbonate de magnésium, éventuellement en présence de borate de zinc.

Bien que toutes les compositions de ce troisième type offrent le même avantage d'éviter la formation de fumées toxiques lors de leur combustion, car exemptes d'halogènes, elles manifestent, chacune d'une manière plus ou moins prononcée, des inconvénients tels que par exemple une assez forte émission de fumées lors d'un sinistre (même si les fumées sont peu toxiques), une inflammabilité encore trop rapide, provoquant par exemple pour les conducteurs électriques desdites compositions leur mauvaise résistance à la déformation thermique par surchauffe locale et la rapide disparition de leur rôle fonctionnel électrique.

Dès lors, un premier objet de l'invention est de rechercher des compositions de polymères ayant une résistance au feu améliorée grâce à une diminution de sa capacité à s'enflammer et à propager la flamme.

Bien qu'il existe de nombreuses méthodes pour l'appréciation de l'inflammabilité et la vitesse de propagation des flammes, la caractéristique d'inflammabilité des compositions de polymères résistantes au feu sera par la suite mesurée de manière connue par l'Indice Limite d'Oxygène (I.L.O.) selon la norme ASTM D 2863, ou encore la norme ISO 4589 ou la norme NFT 51071, étant entendu que cet indice est défini comme le volume minimal d'oxygène dans une atmosphère mixte d'oxygène et d'azote nécessaire pour maintenir constante la combustion d'une éprouvette normalisée de matériau polymère.

Un autre objet de l'invention est de rechercher des compositions de polymères résistantes au feu ayant la capacité d'éviter la formation de fumées toxiques et de limiter l'émission de fumée particulièrement gênante sur le lieu d'un sinistre, l'opacité des fumées dégagées lors de la combustion faisant l'objet d'une mesure d'absorption optique.

3

Un autre objet de l'invention est de viser des compositions de polymères résistantes au feu ayant la capacité de disposer, non seulement d'une bonne facilité de mise en oeuvre, mais aussi une bonne tenue au vieillissement, une conservation des propriétés ignifugeantes dans le temps, une bonne résistance même aux basses températures, une bonne tenue à l'humidité et aux agents chimiques, toutes qualités nécessaires et recherchées en association avec un faible coût.

Sommaire de l'invention.

Poursuivant ses recherches, la Demanderesse a mis au point une composition de polymères ignifuge chargée exempte d'halogènes et à faible émission de fumées dont la résistance au feu est hautement améliorée et qui dispose simultanément des propriétés souhaitées précédemment évoquées comme buts à atteindre.

Selon l'invention, la composition de polymères chargée à haute résistance au feu, comprenant un constituant polymère qui est un élastomère et/ou un élastomère à caractère thermoplastique et une charge minérale ignifugeante formée d'hydroxyde d'aluminium et de carbonate de calcium, d'au moins un agent réticulant et éventuellement d'au moins un agent plastifiant, se caractérise en ce que, pour diminuer la capacité à l'inflammation et à la propagation de la flamme, elle comprend, pour 100 parties en poids dudit constituant polymère, de 100 à 500 parties en poids d'une charge minérale ignifugeante constituée d'hydroxyde d'aluminium ayant une surface spécifique B.E.T. au moins égale à 4 $m^2.g^{-1}$, et de 10 à 50 parties en poids de carbonate de calcium de surface spécifique B.E.T. comprise entre 3 et 10 $m^2.g^{-1}$, bornes incluses.

Description détaillée de l'invention.

Ainsi, alors que l'art antérieur décrit des compositions de polymères ignifuges formées d'un constituant polymère et d'une charge minérale ignifugeante, comportant un hydroxyde d'aluminium ou de magnésium ou de calcium éventuellement associé à du carbonate de calcium naturel ou précipité, la composition de polymères selon l'invention se distingue de l'art connu par le fait que la charge minérale ignifugeante comporte obligatoirement et simultanément de l'hydroxyde d'aluminium et du carbonate de calcium et constitue un mélange synergique ayant la propriété de rendre minimale l'inflammabilité de ladite composition, dès lors que le carbonate de calcium pulvérulent mis en oeuvre dispose d'une surface spécifique B.E.T. comprise entre 3 et 10 $m^2.g^{-1}$, bornes comprises, et que l'hydroxyde d'aluminium dispose d'une surface spécifique B.E.T. d'au moins 4 $m^2.g^{-1}$.

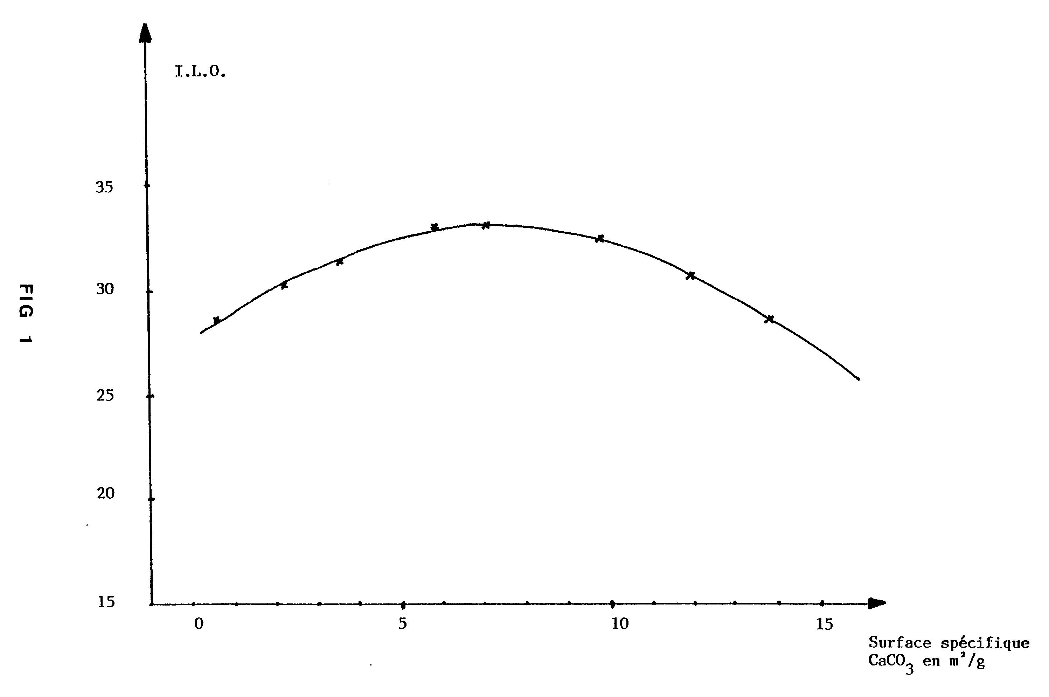

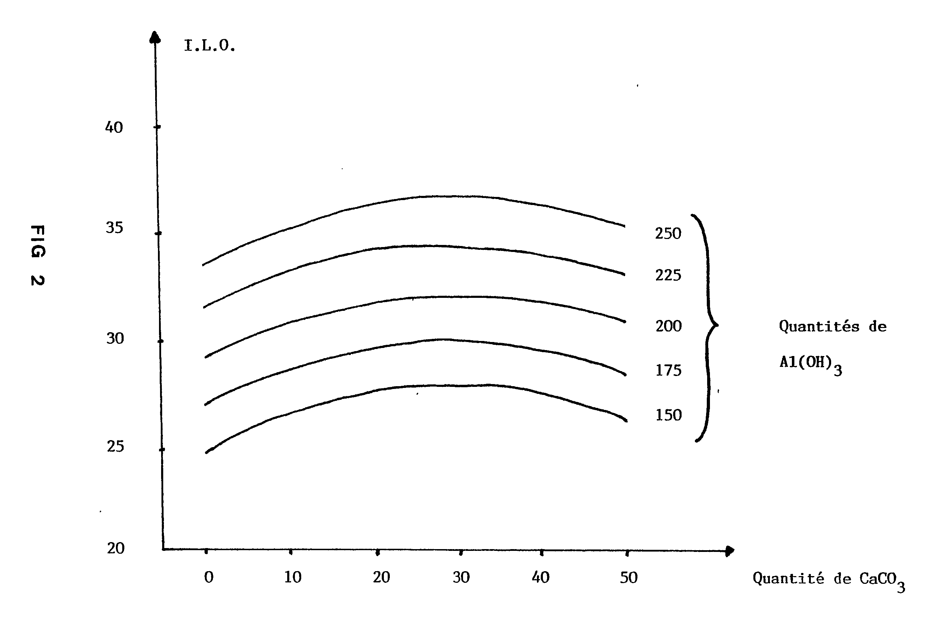

Le phénomène de synergie est rendu particulièrement perceptible et probant grâce aux figures 1 et 2 ayant un caractère seulement illustratif de l'objet de l'invention.

Dans le cas de la figure 1, la charge minérale de la composition de polymères hautement résistante au feu est formée, pour 100 parties en poids du constituant polymère, de 200 parties en poids d'hydroxyde d'aluminium ayant une surface spécifique B.E.T. de 6,2 $m^2.g^{-1}$ (MARTINAL OL 107 de Martinswerk) et de 20 parties en poids de carbonate de calcium dont la surface spécifique B.E.T. évolue de 0,5 à 13,5 $m^2.g^{-1}$.

L'I.L.O. expérimentalement déterminé à partir des compositions de polymères ignifuges atteint une valeur optimale pour une surface spécifique du carbonate de calcium se situant autour de 7 $m^2.g^{-1}$.

Dans le cas de la figure 2, la charge minérale des diverses compositions de polymères hautement résistantes au feu est formée, pour 100 parties en poids du constituant polymère, de 150 à 250 parties en poids d'hydroxyde d'aluminium ayant ici une surface spécifique B.E.T. de 6,2 $m^2.g^{-1}$ (MARTINAL OL 107 de Martinswerk) et de 0 à 50 parties en poids de carbonate de calcium ayant ici une surface spécifique B.E.T. de 6,0 $m^2.g^{-1}$.

L'I.L.O. expérimentalement mesuré à partir des diverses compositions comportant des charges croissantes de carbonate de calcium atteint systématiquement une valeur optimale.

La composition de polymères selon l'invention dispose d'une manière préférentielle et pour 100 parties en poids de constituant polymère, de 20 à 35 parties en poids de carbonate de calcium pulvérulent dont la surface spécifique, mesurée par la méthode B.E.T., est souhaitablement choisie entre 5 et 8 $m^2.g^{-1}$.

De même, la composition de polymères selon l'invention dispose d'une manière préférentielle, dans la charge minérale ignifugeante et pour 100 parties en poids de constituant polymère, de 120 à 450 parties en poids d'hydroxyde d'aluminium dont la surface spécifique est d'au moins 4 $m^2.g^{-1}$.

Le constituant polymère selon l'invention, dont les qualités assurent les propriétés technologiques de la composition de polymères, est généralement choisi parmi les élastomères et/ou élastomères à caractère thermoplastique qui appartiennent au groupe constitué par les copolymères d'éthylène-propylène (EPM), d'éthylène- propylène-diène monomère (EPDM), de styrène-butadiène-ruber (SBR) à haute teneur en styrène, d'éthylène-acétate de vinyle (EVA), d'éthylène-éthylacrylate (EEA), de styrène-butadiène-styrène (SBS) séquencé, d'éthylène-butadiène-styrène (EBS) séquencé et/ou des thermoplastiques tels que les polyoléfines.

Les élastomères et/ou élastomères à caractère thermoplastique peuvent être mis en oeuvre seuls, mais ils le sont plus généralement en étant associés sous forme de mélange comportant au moins deux copolymères. Ainsi, le constituant polymère peut être formé d'un polymère seul ou en association avec d'autres polymères et/ou copolymères.

Quand l'élastomère utilisé est un copolymère d'éthylène et de propylène, il comporte environ 40 à 80% en poids d'éthylène et de 60 à 20% en poids de propylène. Si l'élastomère est un copolymère thermoplastique d'éthylène-propylène-diène monomère, il comporte environ de 40 à 80% en poids d'éthylène, de 60 à 20% en poids de propylène et de 1 à 10% en poids de diène monomère. Si l'on met en oeuvre un mélange de copolymère d'éthylène-propylène (EPM) et de copolymère d'éthylène-propylène-diène monomère (EPDM), le rapport pondéral EPM/EPDM est choisi dans l'intervalle 90/10 à 10/90 et préférentiellement dans l'intervalle 70/30 à 30/70.

Telle que la Demanderesse a pu l'observer, l'amélioration des propriétés ignifugeantes de la composition de polymères selon l'invention résulte bien de l'effet synergique créé par l'addition dans les proportions précédemment indiquées de $CaCO_3$ ayant une surface spécifique B.E.T. comprise entre 3 et 10 $m^2.g^{-1}$ à la charge minérale ignifugeante d'hydroxyde d'aluminium ayant une surface spécifique B.E.T. au moins égale à 4 $m^2.g^{-1}$ .

Dès lors et selon les figures 1 et 2, une composition de polymères contenant par exemple 100 parties en poids d'un copolymère EPDM et 200 parties en poids d'hydroxyde d'aluminium conduit à un I.L.O. de l'ordre de 28. Mais, quand cette composition de polymères est assujettie à l'introduction supplémentaire de 20 parties en poids de $CaCO_3$ ayant les caractéristiques précitées, l'I.L.O. augmente de 28 à 33, alors que, pour atteindre cette valeur de 33 avec le seul hydroxyde d'aluminium, la composition de polymères aurait dû contenir 235 parties en poids dudit hydroxyde pour 100 parties en poids du copolymère.

Ainsi, la charge minérale de la composition de polymères selon l'invention, formée d'un mélange d'hydroxyde d'aluminium et de $CaCO_3$ disposant l'un et l'autre des caractéristiques précitées, est à l'origine d'un effet de synergie révélé par l'augmentation très significative de l'I.L.O.

La composition de polymères à haute résistance au feu peut également contenir, outre le constituant polymère et la charge minérale ignifugeante, au moins un agent réticulant introduit à raison de 1 à 6 parties en poids et préférentiellement à raison de 2,5 à 5,0 parties en poids pour 100 parties en poids du constituant polymère.

Cet agent réticulant, qui agit sur la formation de liaisons de valence primaire entre les molécules du constituant polymère, permet d'obtenir les propriétés mécaniques souhaitées sans risque de dégradation des propriétés de résistance au feu.

L'agent réticulant est généralement choisi parmi ceux connus comprenant les peroxydes organiques ou les silanes greffés sur le polymère, le soufre et/ou les donneurs de soufre, ces derniers étant déconseillés en raison des produits toxiques qu'ils peuvent générer lors d'une combustion.

En outre, la composition de polymères à haute résistance au feu peut contenir au moins un agent plastifiant de type connu, introduit à raison de 0 à 90 parties en poids et préférentiellement à raison de 10 à 60 parties en poids pour 100 parties en poids du constituant polymère. La présence d'un tel agent peut être particulièrement avantageuse, dès lors qu'il peut permettre une mise en oeuvre aisée de la composition selon l'invention.

L'agent plastifiant peut être choisi parmi ceux habituellement connus et mis en oeuvre tels que les produits pétroliers du type paraffinique et/ou naphténique seuls ou en association avec des plastifiants synthétiques tels que alkylphosphates esters de l'acide phtalique, ou des plastifiants polymères tels que les sels d'acide adipique ou sébacique.

De plus, la composition de polymères à haute résistance au feu peut également recevoir une charge minérale renforçante formée de silice précipitée, disposant d'une surface spécifique B.E.T. comprise entre 100 et 350 $m^2.g^{-1}$ et préférentiellement entre 175 et 270 $m^2.g^{-1}$. Ladite charge minérale renforçante est introduite dans la composition de polymères selon l'invention à raison de 0 à 80 parties en poids, mais préférentiellement à raison de 10 à 50 parties en poids pour 100 parties en poids du constituant polymère.

Toutefois, lorsqu'une charge minérale renforçante est introduite dans la composition de polymères selon l'invention, il est souhaitable de lui adjoindre un agent de traitement à raison de 0,1 à 5,0% en poids par rapport à ladite charge renforçante.

En général, l'agent de traitement de la charge minérale renforçante est de type connu et est choisi préférentiellement dans le groupe constitué par les alkyles glycols tels que polyglycols, les amines et particulièrement les amines tertiaires telles que la triéthanolamine, les silicones, ou encore les silanes tels que vinylsilane, amino-silane, mercaptosilane...

De même, il peut être souhaitable d'introduire dans la composition de polymères selon l'invention un agent de traitement de la charge minérale ignifugeante constitué par l'hydroxyde d'aluminium associé à du carbonate de calcium, ayant l'un et l'autre les caractéristiques physiques précitées.

Quand il est utilisé, cet agent est choisi parmi ceux connus de l'homme de l'art tels que les organosilanes, les organozinc, les organo-zirconium ou encore les titanates. Il est alors introduit à raison de 0,4 à 2,0% en poids par rapport à la charge minérale ignifugeante.

Enfin, la composition de polymères selon l'invention peut également recevoir un agent de vitrification, également connu, qui peut être choisi dans le groupe formé par les borates métalliques tels que par exemple le borate de zinc qui est introduit à raison de 0,5 à 20 parties en poids pour 100 parties en poids de constituant polymère.

Ainsi, la composition de polymères à haute résistance au feu selon l'invention, exempte d'halogène, comprenant un constituant polymère qui est un élastomère et/ou un élastomère à caractère thermoplastique et une charge minérale ignifugeante formée d'hydroxyde d'aluminium et de carbonate de calcium de surface spécifique B.E.T. comprise entre 3 et 10 $m^2.g^{-1}$, est particulièrement remarquable en raison des qualités exceptionnelles qu'elle développe par comparaison avec les compositions de l'art antérieur.

Parmi ces qualités exceptionnelles peuvent être plus spécialement mentionnées une inflammabilité minimale (indice I.L.O. élevé), un faible dégagement de fumées non toxiques, une facilité de mise en oeuvre, une bonne tenue au vieillissement, une conservation des propriétés ignifugeantes dans le temps, une bonne résistance aux basses températures et au fluage, une bonne tenue à l'humidité et à certains produits chimiques industriels, exempts des phénomènes de démixtion des constituants de la composition, et enfin un prix de revient minimal.

Dès lors, la composition de polymères selon l'invention peut être mise en oeuvre dans les applications relatives au revêtement des sols, à l'isolation et au garnissage des fils et câbles électriques, au moulage d'objets et à l'extrusion de profilés nécessitant une bonne résistance au feu. En particulier, ladite composition de polymères, quand elle est utilisée comme gainage pour câbles électriques, passe le test NFC 32-070-2-2 de non propagation d'incendie (essais effectués au four dit C.S.T.B.).

L'invention sera mieux perçue grâce aux exemples illustratifs développés ci-après.


Exemple 1

Cet exemple a pour but d'illustrer d'une manière comparative avec des compositions de polymères de l'art antérieur l'excellent comportement au feu des compositions de polymères selon l'invention, et de mettre en évidence l'effet de synergie provoqué par la présence simultanée d'hydroxyde d'aluminium et de carbonate de calcium pour des surfaces spécifiques choisies dans les intervalles de l'invention, en faisant varier les quantités relatives de l'un et l'autre constituants de la charge minérale.

Pour ce faire, on a préparé les compositions de polymères suivantes exprimées en parties en poids pour 100 parties en poids du constituant polymère :
- constituant polymère : 100
mélange 50/50 d'EPM 048 et d'EPDM 647
commercialisés par la société TOTAL
- silice précipitée : 40
Microsil ED commercialisée par CROSSFIELD
- plastifiant : 30
huile PLAXENE 6110 commercialisée par TOTAL
- agent de réticulation : 3
peroxyde à 100% de matière active
- agents divers : 32
lubrifiant, activateur, anti-oxydant
en quantité suffisante
- charge d'hydroxyde d'aluminium : 100 à 400
- charge de carbonate de calcium : 0 à 50

Pour préparer ces compositions de polymères chargées, on a introduit les charges d'hydroxyde d'aluminium et de carbonate de calcium dans un malaxeur Banbury. On a alors ajouté sous malaxage les autres ingrédients tels que la silice, le plastifiant, les agents divers et, en dernier, le constituant polymère.

On a maintenu le malaxage pendant le temps nécessaire à l'obtention d'une composition de polymères homogène. Puis la masse pâteuse issue du malaxeur Banbury a été reprise sur un malaxeur à cylindres où s'est effectuée l'incorporation de l'agent réticulant et la mise en feuille de la composition de polymères.

Chaque composition de polymères selon l'invention a reçu des quantités variables exprimées en parties en poids d'hydroxyde d'aluminium (Al(OH)$_3$) et de carbonate de calcium (CaCO$_3$) de même coupe granulométrique.

La surface spécifique B.E.T. de l'hydroxyde d'aluminium (Al(OH)$_3$) était de 6,2 m$^2$.g$^{-1}$ et celle du carbonate de calcium de 5,5 à 6,0 m$^2$.g$^{-1}$.

A partir des feuilles des compositions de polymères, on a préparé des plaques qui ont été moulées et réticulées sous presse à 180° C.

Dans chaque plaque ainsi réticulée, on a découpé les éprouvettes nécessaires aux mesures des Indices Limites d'Oxygène (I.L.O.) selon la norme NFT 51071 de novembre 1985 (ISO 4589 ou ASTM D 2863) et d'opacité des fumées.

## Mesure de l'I.L.O.

On a utilisé un appareil d'essai (modèle JD-14) de l'Indice Limite d'Oxygène pour mesurer l'inflammabilité selon la norme ASTM D 2863.

L'indice d'oxygène est défini comme le volume minimal d'oxygène dans une atmosphère d'oxygène et d'azote qui s'élève lentement et qui maintient constante la combustion d'une éprouvette de matériau polymère. L'éprouvette est supportée verticalement à l'intérieur d'un cylindre de verre. Un mélange d'oxygène et d'azote filtré par des billes de verre pénètre par la partie inférieure du cylindre et s'élève dans ce cylindre. On introduit à la partie supérieure du cylindre de verre un micro-chalumeau allumeur à gaz de façon à enflammer la partie supérieure de l'éprouvette.

Dès que l'éprouvette commence à brûler, on règle minutieusement le débit d'oxygène et d'azote de façon à maintenir une inflammation pendant au moins trois minutes. Préalablement, on règle le débit de gaz pour déterminer les limites d'inflammabilité qui sont comprises entre la combustion complète de l'éprouvette et son extinction. Du fait que la flamme brûle du haut vers le bas de l'éprouvette, on élimine pratiquement l'échauffement par convexion. De cette façon, les vapeurs chauffées qui s'élèvent au cours de la combustion ne peuvent pas préchauffer l'éprouvette et, en faisant varier la teneur en oxygène, il est possible de déterminer à un pour cent près la teneur minimale en oxygène qui permet de maintenir la combustion.

## Mesure d'opacité des fumées.

On a utilisé un appareillage composé de :
- un appareil d'essai (modèle JD 14) de l'Indice Limite d'Oxygène (I.L.O.),
- une chambre à fumée (d'une capacité d'environ un mètre cube) reliée par une gaine souple à l'appareil I.L.O., munie de conduits d'entrée d'air et d'une ventilation permettant l'évacuation des fumées après chaque essai, ladite chambre étant également dotée d'une source lumineuse ponctuelle et d'une cellule photoélectrique placées en opposition,
- un enregistreur relié à la cellule photoélectrique et permettant de relever, en fonction du temps, l'opacification de l'atmosphère de la chambre à fumée pendant l'essai.

L'intensité lumineuse recueillie par la cellule photoélectrique est arbitrairement comptée sur une échelle allant de zéro (absence de fumée) à cent (obturation totale de la cellule par un cache opaque).

Pour effectuer la mesure d'opacité des fumées, on a opéré de la manière suivante :
- des éprouvettes sont formées par une bandelette découpée dans les plaques vulcanisées et ayant pour dimension approximative 150 x 45 x 2,5 mm; une bandelette est montée sur un support en U (en aluminium ou en acier) qui la maintient longitudinalement, support qui est alors placé dans la chambre de mesure de l'appareil I.L.O.

On règle alors au moyen de microvannes les débits d'oxygène et d'azote de façon à obtenir une "richesse" en oxygène de 3 à 6 points au-dessus de la valeur I.L.O. du mélange trouvée dans les essais spécifiques et un débit global des gaz égal à 17 l/min.

Le choix de + 3 à + 6 points d'oxygène pour l'essai a été fait empiriquement; cet excès d'oxygène permet de maintenir une combustion régulière de l'éprouvette pendant toute la durée de l'essai, l'excès d'oxygène devant être d'autant plus grand que l'I.L.O. du mélange est plus élevé.

Une fois les débits stabilisés, on enflamme au moyen d'un brûleur à gaz spécial la tranche sommitale de l'éprouvette et, dès que la combustion s'est établie, on coiffe la chambre de l'I.L.O. avec la gaine souple conduisant gaz et fumées dans la chambre de mesure de l'opacité des fumées; on déclenche alors chronomètre et enregistreur.

Durant toute la mesure, les ouvertures d'admission d'air frais dans la chambre sont fermées et la ventilation (extraction des gaz) coupée.

L'éprouvette est laissée à brûler pendant trois minutes, au bout desquelles les arrivées d'oxygène et d'azote de l'appareil I.L.O. sont fermées ainsi qu'une vanne située à l'entrée de la chambre à fumées, isolant ainsi totalement la chambre de combustion et la gaine souple de liaison; on note le temps écoulé entre la fermeture de la vanne et l'arrêt complet de la combustion de l'éprouvette. La vanne est alors réouverte et on laisse les fumées accumulées pendant l'extinction de la flamme monter dans la chambre.

Un pic d'opacification apparaît sur l'enregistreur quelques secondes après l'ouverture de la vanne.

On a laissé en l'état pendant 90 secondes avant d'ouvrir les admissions d'air frais et de mettre en route la ventilation destinée à évacuer les fumées.

Lorsque l'enregistreur indique que l'opacité est retombée vers son niveau d'origine, on coupe la ventilation et on referme les conduits d'air frais.

De même, on a soumis les diverses compositions de polymères préparées aux mesures de deux caractéristiques mécaniques en utilisant appareils et méthodes bien connus de l'homme de l'art, à savoir la résistance à la rupture exprimée en Mpa (mégapascals) et l'allongement à la rupture exprimé en pour cent (%).

A l'issue des tests, les caractéristiques des compositions de polymères ont été rassemblées dans le tableau A ci-après.

## TABLEAU A

| CaCO3 en parties en poids | | A1(OH)3 en parties en poids | | | |
|---|---|---|---|---|---|
| | | 100 | 200 | 300 | 400 |
| 0 | ILO | 20,3 | 29,3 | 38,4 | .47,4 |
| | %OP | 22 | 12 | 8 | 5 |
| | R/r | 12,5 | 9,2 | 8,0 | 7 |
| | A% | 650 | 510 | 260 | 45 |
| 10 | ILO | 21,8 | 30,9 | 39,9 | 49,0 |
| | %OP | 20 | 12 | 7 | 5 |
| | R/r | 12,4 | 8,9 | 7,9 | 6,9 |
| | A% | 650 | 490 | 260 | 60 |
| 30 | ILO | 22,9 | 33,0 | 41,0 | 50,1 |
| | %OP | 19 | 10 | 7 | 3 |
| | R/r | 12,4 | 9,0 | 7,8 | 7,0 |
| | A% | 640 | 495 | 245 | 70 |
| 50 | ILO | 21,4 | 30,5 | 38,4 | 47,4 |
| | %OP | 16 | 11 | 7 | 4 |
| | R/r | 12,0 | 8,7 | 7,7 | 6,8 |
| | A% | 620 | 460 | 240 | 50 |

```
I.L.O.  :  Indice Limite d'Oxygène

% OP     :  Pourcentage d'opacification

R/r      :  Résistance  rupture  en  MPa

A%       :  Allongement  rupture  en  %
```

A titre de comparaison, on a mesuré l'Indice Limite d'Oxygène et le pourcentage d'opacification, soit de constituants polymères seuls entrant dans les compositions de polymères devant résister au feu, soit des compositions de polymères actuellement commercialisées et disposant par leur formulation d'une bonne capacité à résister au feu.

Toutes les caractéristiques des compositions de polymères appartenant à l'art antérieur ont été rassemblées dans le tableau B ci-après.

## TABLEAU B

| Numéro d'essai | Constituant polymère 100 parties en poids | charges en parties en poids | ILO | %OP |
|---|---|---|---|---|
| 1 | Ethylène-propylène-diène monomère seul (E.P.D.M.) | 0 | 19 - 20 | 30 - 35 |
| 2 | Polyvinylchlorure (P.V.C.) plastifié | 0 | 24 - 25 | 80 - 85 |
| 3 | Ethylène-vinyl-acétate (E.V.A.) | 220 de Al(OH)3 | 36 | 3 - 4 |
| 4 | Ethylène-propylène-diène monomère (E.P.D.M.) | 100 de Al(OH)3 100 de Kaolin | 29 - 30 | 20 - 25 |
| 5 | Ethylène-propylène-diène monomère (E.P.D.M.) | 30 de CaCO3 | 20 | 30 - 35 |
| 6 | Ethylène-propylène-diène monomère (E.P.D.M.) | 200 de Al(OH)3 | 29 | 12 |

D'après les tableaux précédents et en les comparant à travers leurs résultats, on peut constater que :

Selon le tableau A, quand les quantités d'Al(OH)$_3$ augmentent, l'Indice Limite d'Oxygène manifeste une forte augmentation et le pourcentage d'opacité marque une diminution conséquente.

Quand on introduit du carbonate de calcium dans la charge minérale formée de l'hydroxyde d'aluminium, on constate que l'Indice Limite d'Oxygène (I.L.O.) augmente simultanément, passe par une valeur maximale pour une quantité de CaCO$_3$ se situant autour de 30 parties en poids, puis diminue quand la quantité de carbonate de calcium poursuit sa progression. Dès lors apparaît la définition des quantités limites de carbonate de calcium à mettre en oeuvre dans les compositions de polymères selon l'invention, c'est-à-dire de 10 à 50 parties en poids pour 100 parties en poids de constituant polymère.

Selon le tableau B qui concerne une autre série d'essais (essais 1 à 5) d'EPDM et PVC sans charge, d'EVA chargé avec de l'hydroxyde d'aluminium, d'EPDM chargé avec du carbonate de calcium ou chargé avec un mélange d'hydroxyde d'aluminium et de kaolin, on peut constater par comparaison avec le tableau A l'effet de synergie, particulièrement sensible sur l' I.L.O., provoqué par la présence simultanée dans les compositions de polymères de l'hydroxyde d'aluminium et du carbonate de calcium, ce dernier étant introduit selon les quantités précitées.

## Exemple 2

Cet exemple a pour but d'illustrer l'influence de la surface spécifique B.E.T. du carbonate de calcium sur le comportement au feu des compositions de polymères selon l'invention, contenant simultanément de l'hydroxyde d'aluminium et du carbonate de calcium à raison de 10 à 50 parties en poids pour 100 parties en poids de constituant polymère.

Dans ce but, on a préparé les compositions de polymères suivantes, exprimées en parties en poids pour 100 parties en poids du constituant polymère :

- constituant polymère : 100

mélange 50/50 d'EPM 048 et d'EPDM 647
commercialisés par la société TOTAL
- silice précipitée : 40
Microsil ED commercialisée par CROSSFIELD
- plastifiant : 30
huile Plaxène 6110 commercialisée par TOTAL
- agent de réticulation : 3
peroxyde à 100% de matière active
- agents divers : 32
lubrifiant, activateur, anti-oxydant
en quantité suffisante
- charge d'hydroxyde d'aluminium : 200
$Al(OH)_3$ de surface spécifique 6 $m^2.g^{-1}$
- carbonate de calcium : 25

Toutes les compositions de polymères ont été préparées dans le malaxeur Banbury selon le mode opératoire décrit dans l'exemple 1. On a de cette manière préparé pour chaque lot de carbonate de calcium disposant d'une surface spécifique propre les éprouvettes nécessaires aux mesures des Indices Limites d'Oxygène (I.L.O.) selon la norme ASTM D 2863, de la résistance à la rupture et de l'allongement à la rupture exprimé en pour cent.

A l'issue des essais, toutes les caractéristiques des compositions de polymères ont été regroupées dans le tableau C ci-après.

## TABLEAU C

| Surface spécifique B.E.T. du CaCO3 en $m^2.g^{-1}$ | ILO | Résistance à la rupture : R/r | Allongement à la rupture : A% |
|---|---|---|---|
| 0,5 | 28 | 6,2 | 430 |
| 2,5 | 30,5 | 7,7 | 450 |
| 6,0 | 34 | 7,1 | 450 |
| 9,5 | 32,5 | 7,0 | 420 |
| 13,5 | 29 | 6,8 | 400 |
| 15,0 | 27 | 6,7 | 350 |

D'après le tableau C, il se confirme que la surface spécifique B.E.T. du carbonate de calcium mis en oeuvre avec l'hydroxyde d'aluminium doit souhaitablement se situer entre 3 $m^2.g^{-1}$ et 10 $m^2.g^{-1}$ pour procurer aux compositions de polymères l'Indice Limite d'Oxygène (I.L.O.) le plus élevé.

Ainsi, l'effet de synergie existant entre l'hydroxyde d'aluminium et le carbonate de calcium est confirmé à travers l'influence de la surface spécifique B.E.T.

Exemple 3

Cet exemple poursuit le but d'illustrer l'influence de la surface spécifique B.E.T. de l'hydroxyde d'aluminium sur le comportement au feu des compositions de polymères selon l'invention contenant simultanément du carbonate de calcium et de l'hydroxyde d'aluminium de surface spécifique B.E.T. au moins égale à 4 $m^2.g^{-1}$ .

Pour cela, on a préparé les compositions de polymères ci-après, exprimées en parties en poids pour 100 parties en poids du constituant polymère.
- constituant polymère : 100
mélange 50/50 d'EPM 048 et d'EPDM 647
commercialisés par la société TOTAL
- silice précipitée : 40
Microsil ED commercialisée par CROSSFIELD
- plastifiant : 30
huile Plaxène 6110 commercialisée par TOTAL
- agent de réticulation : 3

peroxyde à 100% de matière active

- agents divers : 32

lubrifiant, activateur, anti-oxydant

en quantité suffisante

- charge d'hydroxyde d'aluminium : 200

à surface spécifique B.E.T. variable

- carbonate de calcium : 0 ou 25

ayant une surface spécifique B.E.T. de 6 m$^2$.g$^{-1}$ selon l'essai

Toutes les compositions de polymères ont été préparées dans le malaxeur Banbury de l'exemple 1 et selon le même mode opératoire.

On a ainsi préparé pour chaque lot d'hydroxyde d'aluminium disposant d'une surface spécifique propre les éprouvettes nécessaires aux mesures des Indices Limites d'Oxygène (I.L.O.) selon la norme ASTM D 2863, de la résistance à la rupture et de l'allongement à la rupture.

A l'issue des essais, toutes les caractéristiques des compositions de polymères ont été regroupées dans le tableau D ci-après.

TABLEAU D

| Parties en poids de CaCO3 ayant une surface spécifique de 6 m$^2$.g$^{-1}$ | | Surface spécifique en m$^2$.g$^{-1}$ de Al(OH)3 | | |
|---|---|---|---|---|
| | | 2,4 | 6,2 | 11,0 |
| 0 | ILO | 27 | 28 | 29 |
| | R/r | 8,4 | 7,0 | 7,2 |
| | A% | 450 | 455 | 400 |
| 25 | ILO | 29 | 34 | 32 |
| | R/r | 7,5 | 7,1 | 6,2 |
| | A% | 425 | 450 | 360 |

A partir de ces résultats, on peut voir tout l'intérêt de mettre en oeuvre dans les compositions de polymères de l'invention de l'hydroxyde d'aluminium ayant une surface spécifique B.E.T. souhaitablement fixée à au moins 4 m$^2$.g$^{-1}$ quand cet hydroxyde est associé au carbonate de calcium.

Exemple 4

Cet exemple a pour but d'illustrer l'intérêt d'une composition de polymères selon l'invention chargée par un mélange d'hydroxyde d'aluminium de surface spécifique 6,2 m$^2$.g$^{-1}$ et de carbonate de calcium de surface spécifique 6 m$^2$.g$^{-1}$ , le constituant polymère étant un éthyl-vinyl-acétate.

Pour cela, on a préparé les compositions de polymères ci-après, exprimées en parties en poids pour 100 parties en poids du constituant polymère.

- constituant polymère : 100

éthyl-vinyl-acétate (EVA)

commercialisé par BAYER

- silice précipitée : 40

Microsil ED commercialisée par CROSSFIELD

- plastifiant : 30

huile Plaxène 6110 commercialisée par TOTAL

- agent de réticulation : 3

peroxyde à 100% de matière active

- agents divers : 32

lubrifiant, activateur, anti-oxydant

en quantité suffisante

- charge d'hydroxyde d'aluminium : 200

à surface spécifique B.E.T. de 6,2 m$^2$.g$^{-1}$

- carbonate de calcium : 0 ou 25

ayant une surface spécifique B.E.T. de 6 m².g⁻¹ selon les essais

Toutes les compositions de polymères ont été préparées dans le malaxeur Banbury de l'exemple 1 et selon le même mode opératoire.

On a ainsi préparé deux compositions de polymères, l'une contenant du $CaCO_3$, l'autre n'en contenant pas, à partir desquelles les éprouvettes nécessaires aux mesures des Indices Limites d'Oxygène (I.L.O.) selon la norme ASTM D 2863, de la résistance à la rupture et de l'allongement à la rupture.

A l'issue des essais, toutes les caractéristiques des compositions de polymères ont été regroupées dans le tableau E ci-après.

## TABLEAU E

| Parties en poids de CaCO3 ayant une surface spécifique de 6 m².g⁻¹ | | E.V.A. et Al(OH)3 à 6,2 m².g⁻¹ |
|---|---|---|
| 0 | ILO | 36 |
| | R/r | 11,0 |
| | A% | 35 |
| 25 | ILO | 40 |
| | R/r | 11,5 |
| | A% | 20 |

On peut voir que, pour les compositions de polymères selon l'invention à base d'éthylène-vinyl-acétate, le comportement de l'I.L.O. est le même que dans les exemples précédents.

## Revendications

1) Composition de polymères chargée à haute résistance au feu, exempte d'halogène, comprenant un constituant polymère qui est un élastomère et/ou un élastomère à caractère thermoplastique et une charge minérale ignifugeante formée d'hydroxyde d'aluminium et de carbonate de calcium, d'au moins un agent réticulant et éventuellement d'au moins un agent plastifiant, caractérisée en ce qu'elle comporte, pour 100 parties dudit constituant polymère, de 100 à 500 parties en poids d'une charge minérale ignifugeante constituée d'hydroxyde d'aluminium ayant une surface spécifique B.E.T. au moins égale à 4 m².g⁻¹ et de 10 à 50 parties en poids de carbonate de calcium de surface spécifique comprise entre 3 et 10 m².g⁻¹ , bornes incluses.

2) Composition de polymères selon la revendication 1, caractérisée en ce que le carbonate de calcium a une surface spécifique B.E.T. de préférence comprise entre 5 et 8 m².g⁻¹ .

3) Composition de polymères selon l'une quelconque des revendications 1 ou 2, caractérisée en ce que le carbonate de calcium est introduit préférentiellement à raison de 20 à 35 parties en poids pour 100 parties en poids du constituant polymère.

4) Composition de polymères selon l'une quelconque des revendications 1 à 3, caractérisée en ce que le trihydrate d'aluminium est introduit préférentiellement à raison de 120 à 450 parties en poids pour 100 parties en poids du composant polymère.

5) Composition de polymères selon l'une quelconque des revendications 1 à 4, caractérisée en ce que le constituant polymère est choisi dans le groupe constitué par les copolymères d'éthylène-propylène (EPM), d'éthylène-propylène-diène monomère (EPDM), de styrène- butadiène-ruber (SBR) à haute teneur en styrène, d'éthylène- acétate de vinyle (EVA), d'éthylène-éthylacrylate (EEA), de styrène-butadiène-styrène (SBS) séquencé, d'éthylène-butadiène styrène (EBS) séquencé.

6) Composition de polymères selon la revendication 5, caractérisée en ce que le constituant polymère est formé d'un polymère seul ou associé à d'autres polymères et/ou copolymères.

7) Composition de polymères selon l'une quelconque des revendications 1 à 6, caractérisée en ce que, quand le composant polymère est un copolymère d'éthylène-propylène, il comporte environ de 40 à 80% en poids d'éthylène et de 60 à 20% en poids de propylène.

8) Composition de polymères selon l'une quelconque des revendications 1 à 7, caractérisée en ce que, quand le composant polymère est un copolymère thermoplastique d'éthylène-propylène-diène monomère, il comporte environ de 40 à 80% en poids d'éthylène, de 60 à 20% en poids de propylène et de 1 à 10% en

13

poids de diène monomère conjugué.

9) Composition de polymères selon l'une quelconque des revendications 1 à 8, caractérisée en ce que, quand le composant polymère est un mélange de copolymère d'éthylène-propylène et de copolymère d'éthylène-propylène-diène monomère (EPM/EPDM), le rapport pondéral EPM/EPDM est choisi dans l'intervalle 90/10 à 10/90 et préférentiellement dans l'intervalle 70/30 à 30/70.

10) Composition de polymères selon l'une quelconque des revendications 1 à 9, caractérisée en ce qu'un agent réticulant est introduit à raison de 1 à 6 parties on poids de matière active et préférentiellement à raison de 2,5 à 5,0 parties en poids de matière active pour 100 parties en poids du composant polymère.

11) Composition de polymères selon la revendication 10, caractérisée en ce que l'agent réticulant est choisi dans le groupe constitué par les peroxydes organiques, le soufre et les donneurs de soufre et les silanes.

12) Composition de polymères selon l'une quelconque des revendications 1 à 11, caractérisée en ce qu'un agent plastifiant est introduit à raison de 0 à 90 parties en poids et préférentiellement à raison de 10 à 60 parties en poids pour 100 parties en poids du composant polymère.

13) Composition de polymères selon la revendication 12, caractérisée en ce que l'agent plastifiant est choisi dans le groupe constitué en particulier par les produits pétroliers du


/DL>


17) Composition de polymères selon l'une quelconque des revendications 1 à 16, caractérisée en ce qu'elle contient un agent de vitrification choisi dans le groupe constitué par les borates métalliques et préférentiellement par le borate de zinc, à raison de 0,5 à 20 parties en poids pour 100 parties en poids du constituant polymère.

18) Applications de la composition de polymères selon les revendications 1 à 17 au revêtement des sols, à l'isolation et au garnissage des fils et câbles électriques, au moulage d'objets et à l'extrusion de profilés nécessitant une bonne résistance au feu.

FIG 1

I.L.O.

Quantités de Al(OH)$_3$

250
225
200
175
150

40
35
30
25
20

0   10   20   30   40   50

Quantité de CaCO$_3$

FIG 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 217 626 (DSG SCHRUMPFSCHLAUG GmbH) <br> * Revendications; tableau 2, preuve B * <br> --- | 1-18 | C 08 K 3/22 <br> C 08 K 3/26 |
| X | GB-A-2 016 016 (NATIONAL DISTILLERS AND CHEMICAL CORP.) <br> * Exemple 4 * <br> --- | 1-18 | |
| X | EP-A-0 230 564 (BANDO CHEMICAL IND., LTD) <br> * Revendications * <br> ----- | 1-18 | |

| DOMAINES TECHNIQUES RECHERCHES (Int. Cl.5) |
|---|
| C 08 K <br> C 08 L |

Le présent rapport a été établi pour toutes les revendications

| Lieu de la recherche | Date d'achèvement de la recherche | Examinateur |
|---|---|---|
| LA HAYE | 28-06-1990 | DE LOS ARCOS Y VELAZQUEZ |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)